# EUROPEAN PATENT APPLICATION

(11) **EP 2 658 330 A1**
(43) Date of publication of application: **30.10.2013**
(21) Application number: 12736670.6
(22) Date of filing: 09.01.2012
(51) Int. Cl.: H04W 72/04

(54) **METHOD USER EQUIPMENT AND NETWORK DEVICE FOR SEMI-PERSISTENT SCHEDULING**

(30) Priority: 17.01.2011 CN 201110009894
(71) Applicant: Huawei Technologies Co., Ltd., Shenzhen, Guangdong 518129 (CN)
(72) Inventor: JIANG, Yi, Shenzhen Guangdong 518129 (CN); QUAN, Wei, Shenzhen Guangdong 518129 (CN); ZHANG, Jian, Shenzhen Guangdong 518129 (CN); CHEN, Xiaofeng, Shenzhen Guangdong 518129 (CN); HUANG, Qufang, Shenzhen Guangdong 518129 (CN)
(74) Representative: Körber, Martin Hans
(86) International application number: PCT/CN2012/070134
(87) International publication number: WO 2012/097692

(57) **Abstract**

The present invention provides a method for semi-persistent scheduling, user equipment and network device. The method comprises: acquiring a SPS group scheduling identity, wherein the SPS group scheduling identity is shared by UEs belonging to a first group; receiving control signalling scrambled with the SPS group scheduling identity on a PDCCH, and unscrambling the control signalling according to the SPS group scheduling identity; receiving a data package on a PDSCH according to unscrambled control signalling, wherein the data package comprises indication information for instructing at least one UE belonging to the first group to perform a SPS operation; and determining that it is necessary to perform the SPS operation according to the indication information, and performing the SPS operation.. The embodiments of the present invention can save PDCCH resource and improve system capacity.

## Description

The present application claims the priority of Chinese Application No. 201110009894.7, filed on January 17, 2011, entitled "Method for Semi-Persistent Scheduling, User Equipment and Network Device", the entire contents of which are incorporated herein by reference.

### TECHNICAL FIELD

The present invention relates to mobile communication technologies, and particularly, to a method for semi-persistent scheduling, user equipment and network device.

### BACKGROUND

In a Long Term Evolution (Long Term Evolution, LTE) system, a base station (eNodeB, eNB) transmits control signalling for scheduling a User Equipment (User Equipment, UE) using a Physical Downlink Control Channel (Physical Downlink Control Channel, PDCCH). When a UE in connected state is scheduled, the control signalling is scrambled with a Cell Radio Network Temporary Identity (Cell Radio Network Temporary Identity, C-RNTI) of the UE. After monitoring the control signalling transmitted on the PDCCH, the UE may unscramble the control signalling transmitted on the PDCCH with its own C-RNTI. The unscrambled control signalling includes physical channel resource allocated for the UE, an adopted Modulation and Coding Scheme (Modulation and Coding Scheme, MCS), and so on. The UE performs a sending and receiving of data on a corresponding physical channel according to related information carried in the control signalling and indication thereof.

The control signalling transmitted on the PDCCH per se is also carried on certain physical resource for transmission. Take a cell of 5 MHz band width as an example, only a dozen control signallings, usually, can be carried in a Transmission Time Interval (Transmission Time Interval, TTI), which meanwhile comprises uplink scheduling signalling and downlink scheduling signalling. Therefore, when averaged to uplink or downlink, only several to a dozen user equipments can be scheduled simultaneously in one TTI. In addition, in some scenes such as in a heterogeneous network, the control signalling may be sent only in some subframes in order to reduce interference among cells. In this case, less control signallings can be transmitted on the PDCCH. As the number of the control signalling transmitted on the PDCCH is limited, the number of users which can be scheduled is also limited, leading to limitation of system capacity.

Semi-Persistent Scheduling (Semi-Persistent Scheduling, SPS) denotes that scheduling of resource is pre-configured and periodical. An eNB may configure a SPS period and Physical Uplink Control Channel (Physical Uplink Control Channel, PUCCH) feedback resource for a UE through a Radio Resource Control (Radio Resource Control, RRC) message. With regard to downlink SPS, the eNB may activate SPS with control signalling transmitted on a PDCCH. In the following data transmission process, the UE receives downlink data at a corresponding time according to the SPS period configured by the RRC message and performs feedback on the configured PUCCH feedback resource, rather than the control signalling transmitted on the PDCCH being employed to perform scheduling at each time the UE is scheduled. When it is necessary to modify or release SPS resource, the eNB may send a SPS modification or release command using control signalling transmitted on the PDCCH.

In a semi-persistent scheduling service, such as a Voice over IP (Voice over IP, VoIP) service, it may be necessary to modify the SPS resource using the control signalling transmitted on the PDCCH frequently with the change of wireless channel conditions, leading to a waste of PDCCH resource.

### SUMMARY

The embodiments of the present invention provide a method for semi-persistent scheduling, user equipment and network device, to save PDCCH resource and improve system capacity.

According to one aspect of the present invention, a method for semi-persistent scheduling is provided, comprising:
acquiring a Semi-Persistent Scheduling (SPS) group scheduling identity, wherein the SPS group scheduling identity is shared by User Equipments (UEs) belonging to a first group;
receiving control signalling scrambled with the SPS group scheduling identity on a Physical Downlink Control Channel (PDCCH), and unscrambling the control signalling according to the SPS group scheduling identity;
receiving a data package on a Physical Down Shared Channel (PDSCH) according to unscrambled control signalling, wherein the data package comprises indication information for instructing at least one UE belonging to the first group to perform a SPS operation; and
determining that it is necessary to perform the SPS operation according to the indication information, and performing the SPS operation.

According to another aspect of the present invention, a method for semi-persistent scheduling is provided, comprising:
sending control signalling scrambled with a SPS group scheduling identity to a User Equipment (UE) belonging to a first group on a Physical Downlink Control Channel (PDCCH), wherein the SPS group scheduling identity is shared by user equipments belonging to the first group;
generating a data package, wherein the data package comprises indication information for instructing at least one UE belonging to the first group to perform a SPS operation; and
sending the data package to the UE, so that the UE unscrambles the control signalling according to the SPS group scheduling identity, receives the data package according to unscrambled control signalling, determines that it is necessary to perform the SPS operation according to the indication information in the data package, and performs the SPS operation.

According to another aspect of the present invention, a user equipment is provided, comprising:
an acquiring module, configured to acquire a Semi-Persistent Scheduling (SPS) group scheduling identity, wherein the SPS group scheduling identity is shared by User Equipments (UEs) belonging to a first group;
a unscrambling module, configured to receive control signalling scrambled with the SPS group scheduling identity on a Physical Downlink Control Channel (PDCCH), and unscramble the control signalling according to the SPS group scheduling identity;
a receiving module, configured to receive a data package on a Physical Down Shared Channel (PDSCH) according to unscrambled control signalling, wherein the data package comprises indication information for instructing at least one UE belonging to the first group to perform a SPS operation; and
a processing module, configured to determine that it is necessary to perform the SPS operation according to the indication information, and perform the SPS operation.

According to another aspect of the present invention, a network device is provided, comprising:
a signalling sending module, configured to send control signalling scrambled with a SPS group scheduling identity to a User Equipment (UE) belonging to a first group on a Physical Downlink Control Channel (PDCCH), wherein the SPS group scheduling identity is shared by user equipments belonging to the first group;
a generating module, configured to generate a data package, wherein the data package comprises indication information for instructing at least one UE belonging to the first group to perform a SPS operation; and
a data sending module, configured to send the data package to the UE, so that the UE unscrambles the control signalling according to the SPS group scheduling identity, receives the data package according to unscrambled control signalling, determines that it is necessary to perform the SPS operation according to the indication information in the data package, and performs the SPS operation.

It can be seen from the above-mentioned technical solutions that, in the embodiments of the present invention, by triggering a SPS operation with indication information in a data package instead of control signalling transmitted on a PDCCH, control signalling transmitted on the PDCCH is avoided to be frequently used to perform SPS operations, and PDCCH resource is saved; and by including indication information of UEs belonging to a same group in the data package, operations on SPS resource of multiple UEs may be performed at the same time, and system capacity is improved.

### BRIEF DESCRIPTION OF DRAWINGS

To illustrate the technical solution in the embodiments of the present invention more clearly, a brief introduction on the accompanying drawings which are needed in the description of the embodiments is given below. Apparently, the accompanying drawings in the description below are some of the embodiments of the present invention, based on which other drawings can also be acquired by the persons of ordinary skill in the art without any inventive effort.
Fig. 1 is a schematic flowchart of a method of a first embodiment of the present invention;
Fig. 2 is a schematic flowchart of a method of a second embodiment of the present invention;
Fig. 3 is a schematic flowchart of a method of a third embodiment of the present invention;
Fig. 4 is a schematic diagram of a format of a MAC CE provided by the embodiments of the present invention;
Fig. 5 is a schematic diagram of a format of another MAC CE provided by the embodiments of the present invention;
Fig. 6 is a schematic diagram of a structure of a user equipment of a fourth embodiment of the present invention;
Fig. 7 is a schematic diagram of a structure of a network device of a fifth embodiment of the present invention.

### DESCRIPTION OF EMBODIMENTS

In order to make obj ectives, technical solutions and advantages of the embodiments of the present invention more clearly, the technical solutions in the embodiments of the present invention will be described clearly and completely hereinafter with reference to the accompanying drawings in the embodiments of the present invention. Evidently, the described embodiments are only a part, but not all, of the embodiments of the present invention. All other embodiments, which can be derived by the persons of ordinary skills in the art based on the embodiments of the present invention without any inventive efforts, fall into the protection scope of the present invention.

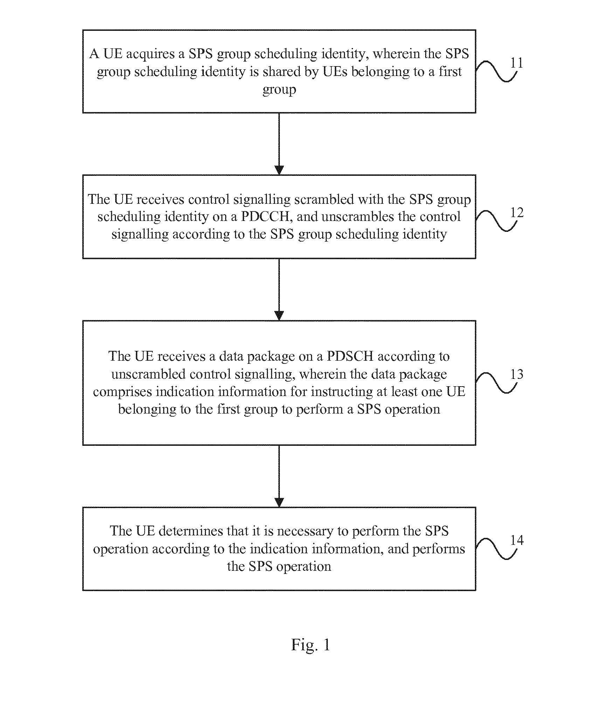

Fig. 1 is a schematic flowchart of a method of a first embodiment of the present invention, comprising the following steps.

Step 11: A UE acquires a SPS group scheduling identity, wherein the SPS group scheduling identity is shared by UEs belonging to a first group.

A manner by which the UE acquires the SPS group scheduling identity may be receiving a Radio Resource Control (RRC) message sent by a base station, wherein the RRC message carries the SPS group scheduling identity allocated for the User equipments (UEs) belonging to the first group;
or,
receiving a paging message sent by the base station, wherein the paging message carries a group identity of the first group, and taking the group identity as the SPS group scheduling identity;
or,
configuring the SPS group scheduling identity for the User equipments (UEs) belonging to the first group.

Step 12: The UE receives control signalling scrambled with the SPS group scheduling identity on a PDCCH, and unscrambles the control signalling according to the SPS group scheduling identity.

Step 13: The UE receives a data package on a Physical Down Shared Channel (Physical Down Shared Channel, PDSCH) according to unscrambled control signalling, wherein the data package comprises indication information for instructing at least one UE belonging to the first group to perform a SPS operation.

The data package comprises a Media Access Control (Media Access Control, MAC) Protocol Data Unit (Protocol Data Unit, PDU).

The indication information for instructing at least one UE belonging to the first group to perform a SPS operation, comprises a MAC Control Element (Control Element, CE) for instructing at least one UE belonging to the first group to perform the SPS operation. In the embodiments of the present invention, the MAC CE for instructing at least one UE belonging to the first group to perform the SPS operation is called as a SPS MAC CE.

Step 14: The UE determines that it is necessary to perform the SPS operation according to the indication information, and performs the SPS operation.

The SPS operation comprises SPS activation, SPS modification or SPS release.

Further, the present embodiment may also comprise that the UE sends acknowledgment ACK information to a network device, so that the network device starts the SPS operation on the UE, which sends the ACK information according to configuration.

In a LTE system, a Hybrid Automatic Repeat reQuest (Hybrid Automatic Repeat reQuest, HARQ) technique is used for insuring reliable transmission of data. When an eNB sends control signalling used for scheduling downlink data of a UE in TTI n on a PDCCH, the UE receives downlink data on a corresponding PDSCH according to an indication indicated by the control signalling, and transmits HARQ feedback in TTI n+k (k is 4 in a Frequency Division Duplex (Frequency Division Duplex, FDD) mode and may be other values in a Time Division Duplex (Time Division Duplex, TDD) mode) on a PUCCH, to inform the eNB whether the data is received successfully or not. The PUCCH resource used by the UE is related to physical resource occupied by the control signalling used in the present scheduling. Specifically, a primary factor used for computing the present PUCCH feedback resource is a location of a first CCE (Control Channel Element) occupied by the control signaling corresponding to the present scheduling.

In the embodiments of the present invention, a method for computing a PUCCH is that the UE determines its order in the present scheduling, that is, a relative position of the UE in the present scheduling, and determines a CCE corresponding to the PUCCH according to the order. For example, in one scheduling, numbers of 4 CCEs occupied by control signalling are 1, 2, 3, and 4, respectively, and an order of scheduled UEs is UE1, UE5, UE6, and UE9. If the 4 UEs all correctly receive downlink data packages, the 4 UEs use PUCCH resource corresponding to CCE 1, 2, 3, and 4, respectively, to perform ACK feedback.

A UE computes PUCCH resource used for HARQ feedback according to its order in the present scheduling, and performs ACK feedback.

For another example, a RRC message may also be used by an eNB to inform a UE to feed back on a designated PUCCH. The details are as follows:
Manner 1: Besides sending group scheduling information through a RRC message, the eNB also needs to inform the UE of PUCCH resource (including number of PUCCHs and specific physical layer resource used by each PUCCH), which is reserved for the group and used for UEs to feed back, through the RRC message.

The number of the reserved PUCCHs is related to number of UEs that can send at a same time in the group and is determined by the eNB, that is, if the eNB determines that data packages of 4 UEs may be transmitted at a same time in the group, the number of the PUCCHs reserved for the group is 4.
Manner 2: When the eNB determines to change number of UEs that can transmit at a same time in the group, the eNB may change reserved PUCCH resource (including number of PUCCHs and specific physical layer resource used by each PUCCH) through a RRC message.

When a UE needs to perform HARQ-ACK feedback, the UE determines a PUCCH to be actually used by itself according to a location at which the UE is scheduled and reserved PUCCH resource received through a RRC message, so as to perform HARQ feedback. For example, if numbers of four reserved PUCCH resource are 1, 2, 3, and 4, then when Use1, UE5, UE6, and UE9 are scheduled simultaneously at a certain moment, the UE1 performs feedback using the PUCCH resource numbered 1, and the UE5 performs feedback using the PUCCH resource numbered 2, and so on; when UE4, UE3, UE7, and UE8 are scheduled simultaneously at a next moment, the UE4 performs feedback using the PUCCH resource numbered 1, and the UE3 performs feedback using the PUCCH resource numbered 2, and so on.

For another example, feedback may be performed by combining the use of PUCCH resource corresponding to CCEs occupied by control signalling and PUCCH resource pre-configured by RRC. Therefore, less reserved PUCCH feedback resource may realize scheduling of more UEs. For example, if number of pre-configured PUCCHs is 4, and number of CCEs occupied by control signalling in group scheduling at a certain moment is 2, then an eNB may schedule 4+2=6 UEs at a same time, wherein 4 UEs perform feedback using pre-configured PUCCHs, and 2 UEs perform feedback using the PUCCHs corresponding to the CCEs occupied by control signaling. Specifically, PUCCH resource used by a UE may be flexibly configured explicitly or mapped implicitly. For example, the first 4 scheduled UEs perform feedback using the pre-configured PUCCH resource, and the last 2 UEs perform feedback using PUCCHs corresponding to CCEs occupied by PDCCHs, and so on.

In the present embodiment, by triggering a SPS operation with indication information in a data package instead of control signalling transmitted on a PDCCH, control signalling transmitted on the PDCCH is avoided to be frequently used to perform SPS operations, and PDCCH resource is saved; and by including indication information of UEs belonging to a same group in the data package, operations on SPS resource of multiple UEs may be performed at a same time, and system capacity is improved.

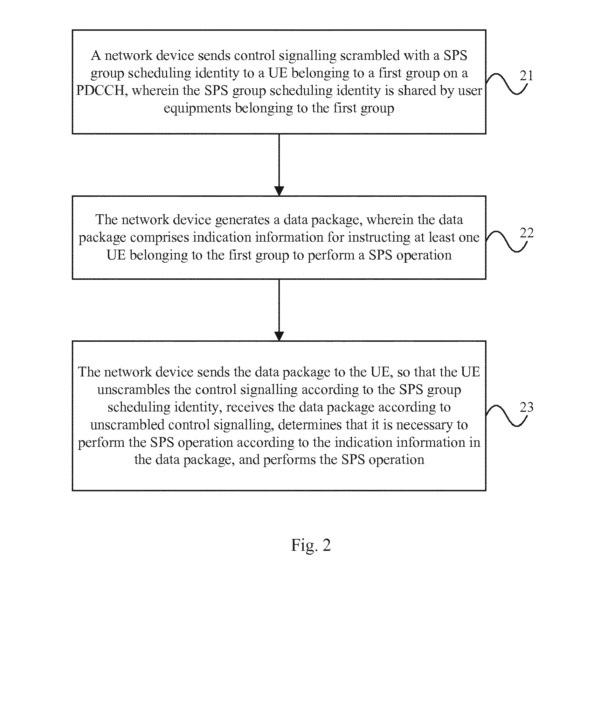

Fig. 2 is a schematic flowchart of a method of a second embodiment of the present invention, comprising the following steps.

Step 21: A network device sends control signalling scrambled with a SPS group scheduling identity to a UE belonging to a first group on a PDCCH, wherein the SPS group scheduling identity is shared by user equipments belonging to the first group.

Particularly, the network device may be an eNB or a NodeB. It can be anticipated that the network device may also be any network side entity accomplishing similar functions, and it will not be described in detail herein.

Step 22: The network device generates a data package, wherein the data package comprises indication information for instructing at least one UE belonging to the first group to perform a SPS operation.

Particularly, the data package may specifically be a MAC PDU.

The indication information for instructing at least one UE belonging to the first group to perform a SPS operation comprises a Media Access Control Control Element (MAC CE) for instructing at least one UE belonging to the first group to perform the SPS operation. The MAC CE is called as a SPS MAC CE.

Step 23: The network device sends the data package to the UE, so that the UE unscrambles the control signalling according to the SPS group scheduling identity, receives the data package according to unscrambled control signalling, determines that it is necessary to perform the SPS operation according to the indication information in the data package, and performs the SPS operation.

Further, the present embodiment may also comprise that the network device receives acknowledgment ACK information sent by the UE, and starts the SPS operation on the UE, which sends the ACK information according to configuration.

The SPS operation comprises SPS activation, SPS modification or SPS release.

In the present embodiment, by triggering a SPS operation with indication information in a data package instead of control signalling transmitted on a PDCCH, control signalling transmitted on the PDCCH is avoided to be frequently used to perform SPS operations, and PDCCH resource is saved; and by including indication information of UEs belonging to a same group in the data package, operations on SPS resource of multiple UEs may be performed at a same time, and system capacity is improved.

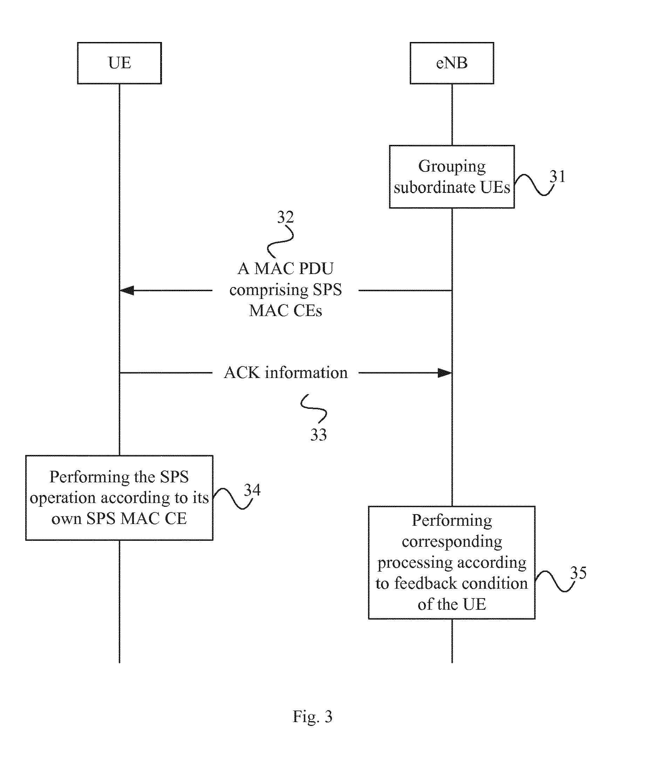

Fig. 3 is a schematic flowchart of a method of a third embodiment of the present invention, comprising the following steps.

Step 31: An eNB groups UEs in connected state which it serves (i.e. subordinate UEs), and allocate a SPS group scheduling identity for each group.

The eNB may group the subordinate UEs according to at least one of the following items: downlink quality condition, service burst condition, service characteristic condition. For example, a criterion for the eNB to group the subordinate UEs may be dividing UEs with similar downlink qualities into one group, and may also be dividing UEs with relatively intensive service bursts, or UEs with similar service characteristics into one group. It is to be noted that, a grouping method actually used by the eNB includes, but is not limited to, the contents described above, and it may be an individual one thereof, may also be a combination of part of the methods thereof, and so on.

After allocating the SPS group scheduling identity, the eNB may send information, such as the SPS group scheduling identity, UE information, and so on, to a UE by carrying in a RRC message, wherein the UE information may be position information of the UE in the group, number of the UE in the group, or an UE identity.

Furthermore, in a specific grouping method, if the eNB finds that UEs which have already been divided into one group can no longer be divided into a same group, the eNB may regroup the UEs, and modify original group information through a RRC message.

The RRC message used for informing group information may be an existing RRC message, such as a RRC Connection Reconfiguration message (RRC Connection Reconfiguration), and may also be a newly added RRC message. And parameters in an existing message, newly added parameters, or some fields in existing parameters may be used as specific sending parameters for indicating the group information.

These RRC messages and indication parameters are titles adopted just for convenience of description, which can not limit the suitable scope of the embodiments of the present invention. That is, maybe there are not similar titles in some systems, from which, however, it can not be thought that the technical solutions in the embodiments of the present invention are not suitable for these systems.

Step 32: The eNB sends a MAC PDU to a UE needing to perform SPS, wherein the MAC PDU includes SPS MAC CEs belonging to UEs belonging to a same group with the UE, and the SPS MAC CEs are used for instructing the UEs to perform a SPS activation, modification, or release; and schedules the UEs belonging to the same group with a control signalling, wherein the control signalling is scrambled with a SPS group scheduling identity.

Specifically, the MAC PDU may include SPS MAC CE(s) of one or more UEs that need to be SPS scheduled and belong to a same group, may also include data package(s) of the UE(s) needing to be SPS scheduled, and may also include data packages of other UEs belonging to the same group with the UE(s) needing to be SPS scheduled. Wherein a data package of a UE may be one or more MAC CEs; may also be one or more MAC PDUs; and may also be one or more MAC CEs and one or more MAC PDUs.

The MAC PDU also includes a MAC PDU sub-header corresponding to the SPS MAC CE, wherein the MAC PDU sub-header includes a LCID field, and the LCID field includes a field for indicating that the SPS MAC CE is for semi-persistent scheduling, and a field used for indicating a UE identity corresponding to the SPS MAC CE. The LCID field may be as shown in table 1.

**Table 1**

| Index | LCID values |
|---|---|
| 00000 | CCCH |
| 00001-01010 | Identity of the logical channel |
| 01011-11001 | Reserved |
| 11010 | Semi-persistent Scheduling |
| 11011 | UE Identity |
| 11100 | UE Contention Resolution Identity |
| 11101 | Timing Advance Command |
| 11110 | DRX Command |
| 11111 | Padding |

The above-mentioned "11010" field may be used for indicating that a corresponding MAC CE is a SPS MAC CE. The above-mentioned "11011" field is used for indicating a UE corresponding to the SPS MAC CE. Of course, distinguishing UEs may also be realized by using other manners.

In addition, a format of the SPS MAC CE may be as follows.

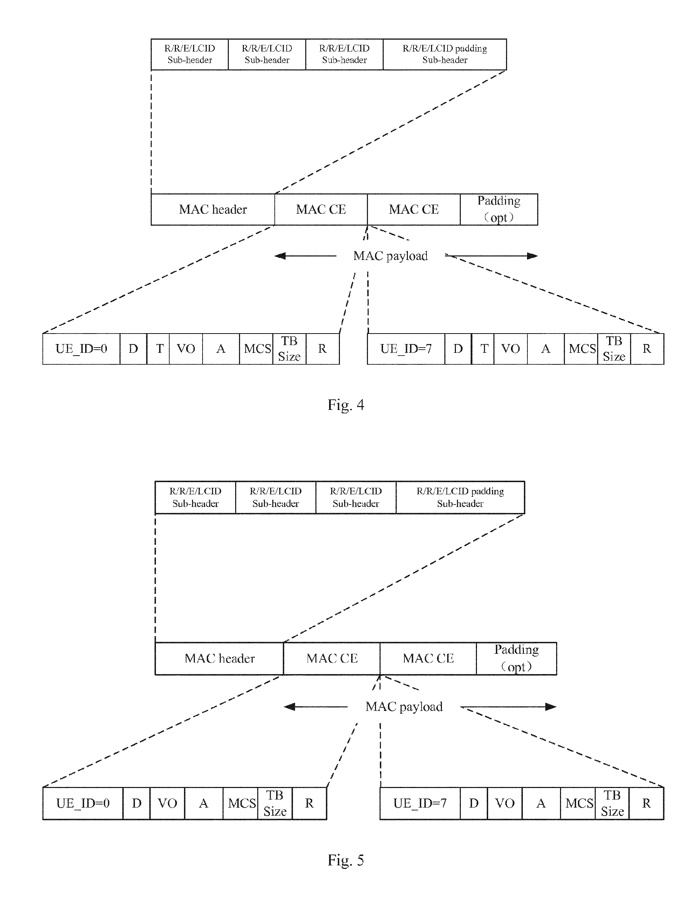

Format 1, as shown in Fig. 4, comprises: a UE identity UE_ID, which may be the C-RNTI of a UE or other identities that can uniquely identify the UE in the group; a first field for indicating to perform an operation on uplink SPS resource or to perform an operation on downlink SPS resource; a second field for indicating to perform an activation / modification operation on SPS resource, or to perform a release operation on SPS resource; a third field for indicating an effective moment of the SPS resource; and a fourth field for indicating SPS resource, a MCS and a transmission block size. Of course, the above-mentioned first field, the second field, etc, are used for distinguishing the respective fields, and will not limit the contents and order of the respective fields. For example, a field for indicating to perform an activation / modification operation on SPS resource, or to perform a release operation on SPS resource may be named as a first field, while a field for indicating to perform an operation on uplink SPS resource or to perform an operation on downlink SPS resource may be named as a second field, and so on. Also, the information for indicating SPS resource, a MCS and a transmission block size in the fourth field may be respectively denoted with different fields. In addition, a reserved bit field may also be included, so that a length of the MAC CE is an integer times of a byte.

Specifically, a SPS MAC CE includes:
a Direction (D) (1 bit), for indicating uplink or downlink, for example, it indicates downlink when set to 1, and indicates uplink when set to 0;
a Type (T), for indicating a SPS resource activation / modification, or release, for example, it indicates a resource activation / modification when set to 1, and indicates a release when set to 0;
a Valid Occasion (VO), denoting an effective moment of SPS resource;
a Resource block assignment (A), denoting uplink or downlink SPS resource;
a Modulation and coding scheme (MCS), denoting a specifically adopted MCS; and
a TB Size, denoting a transmission block size.

Format 2, as shown in Fig. 5, comprises: a UE identity UE_ID, which may be a C-RNTI of a UE or other identities that can uniquely identify a UE in the group; a first field, for indicating to perform an operation on uplink SPS resource or to perform an operation on downlink SPS resource; a third field, for indicating an effective moment of SPS resource; and a fourth field, for indicating SPS resource, a MCS and a transmission block size.

Specifically, a SPS MAC CE includes:
a Direction (D) (1 bit), for indicating uplink or downlink, for example, it indicates downlink when set to 1, and indicates uplink when set to 0;
a Valid Occasion (VO), denoting an effective moment of SPS resource;
a Resource block assignment (A), denoting uplink or downlink SPS resource;
a Modulation and coding scheme (MCS), denoting a specifically adopted MCS; and
a TB Size, denoting a transmission block size.

In one embodiment, the MAC PDU comprises at least one SPS MAC CE, and each SPS MAC CE of the at least one SPS MAC CE comprises, respectively, an identity of a UE needing to perform semi-persistent scheduling and an indication for instructing the UE needing to perform semi-persistent scheduling to perform the SPS operation, wherein the SPS operation includes a SPS activation, a SPS modification or a SPS release.

In another embodiment, the MAC PDU comprises one SPS MAC CE, wherein the one SPS MAC CE comprises at least one semi-persistent scheduling unit, and each semi-persistent scheduling unit of the at least one semi-persistent scheduling unit comprises, respectively, an identity of a UE needing to perform semi-persistent scheduling and an indication for instructing the UE needing to perform semi-persistent scheduling to perform SPS operation, and the SPS operation includes SPS activation, SPS modification or SPS release.

Step 33: A UE feeds back ACK information to the eNB if receiving its own data package.

After receiving a PDCCH, the UE unscrambles control signalling with a SPS group scheduling identity acquired in advance, obtains unscrambled control signalling, and receives a MAC PDU according to the unscrambled control signalling. The UE may acquire the SPS group scheduling identity by using the following approaches.

The UE receives a RRC message, wherein the RRC message carries the SPS group scheduling identity allocated for the UE by a network side; or, the UE acquires the SPS group scheduling identity according to pre-configured information.

Its own data package includes its own SPS MAC CE or its own normal data package, such as a MAC CE or a MAC SDU.

The UE ignores the present scheduling if it does not receive a data package sent by a base station, or if none of received data packages belongs to itself.

The UE may determine whether there is a data package belonging to itself or not among received data according to a UE identity in a LCID.

Step 34: The UE performs SPS activation, modification or release according to its own SPS MAC CE, if receiving a SPS MAC CE corresponding to itself.

Specifically, with regard to a SPS MAC CE of format 1, a UE receives the SPS MAC CE, and determines whether it is related to downlink SPS resource operation or uplink SPS resource operation according to the contents in the Direction filed. Then, the UE determines whether it is necessary to perform SPS resource activation / modification, or to perform SPS resource release in the Type field. If it is SPS resource activation / modification, the UE stores corresponding uplink or downlink SPS resource, an effective moment and related HARQ information as configured uplink grant or downlink allocation. Initializing (SPS resource activation) or reinitializing (SPS resource modification) the configured uplink grant or downlink allocation is started in a TTI indicated by the effective moment, and may occur again in the following cycle moments. The following receiving and sending processes of SPS are the same as that in the prior art. If it is SPS resource release, the configured uplink grant or downlink allocation is released.

With regard to a SPS MAC CE of format 2, a UE receives the SPS MAC CE, and determines whether it is related to downlink SPS resource operation or uplink SPS resource operation according to the contents in the Direction filed. Then, the UE determines whether it is necessary to perform SPS resource activation / modification, or to perform SPS resource release according to the Resource block assignment field and the Modulation and coding scheme field. A specific determining method is that it is SPS resource release if the Resource block assignment field and the Modulation and coding scheme field both are set to 1; otherwise, it is SPS resource activation / modification. If it is SPS resource activation / modification, corresponding uplink or downlink SPS resource, an effective moment and related HARQ information are stored as configured uplink grant or downlink allocation; and initializing (SPS resource activation) or reinitializing (SPS resource modification) the configured uplink grant or downlink allocation is started in a TTI indicated by the effective moment, and may occur again in the following cycle moments. The following receiving and sending processes of SPS are the same as that in the prior art. If it is SPS resource release, the configured uplink grant or downlink allocation is released.

In addition, the third field mentioned above may be an absolute time, a relative time, or an offset value. Particularly, the Valid Occasion in the format mentioned above may be an absolute time, such as an absolute frame number and subframe number; may also be a relative time, such as at which subframe the activation command takes effect after it is received; and may also be an Offset (offset) value, according to which an eNB and a UE uniquely determine a moment for the SPS activation to take effect. For example, if a period of SPS is 20 ms, and the Offset value is 19, then a moment for SPS to take effect may be a next moment meeting the following condition: (SFN*10+Subframe) Mod 20ms (SPS period) == 19, that is, if a SPS activation command is received at moment 0, a next SPS moment is 19, and then successively followed by 39,59, ....

Step 35: The eNB performs corresponding processing according to feedback condition of the UE.

For example, the eNB retransmits the SPS MAC CE of the UE if it does not receive ACK information sent by the UE; and the eNB starts the SPS operation on the UE at a corresponding moment according to pre-configured information if it receives the ACK information sent by the UE. With regard to specific manners for feeding back ACK information, the first embodiment may be referred to.

In addition, Step 34 does not have a time constraint relationship with Steps 33 and 35.

Also, the above-mentioned method to carry SPS resource by a MAC CE may coexist with an existing method to carry SPS resource by control signalling transmitted on a PDCCH. For example, the two methods are used parallel or used independently. Particularly, if an eNB activates SPS resource of UE A by means of control signalling transmitted on the PDCCH, and when the resource need to be modified or released, the eNB may perform modification or release on the resource by means of group scheduling. On the contrary, if an eNB activates the SPS resource of UE A by means of group scheduling, and when the resource need to be modified or released, the eNB may perform modification or release on the resource by means of control signalling transmitted on the PDCCH.

In the present embodiment, by triggering a SPS operation with indication information in a data package instead of control signalling transmitted on a PDCCH, control signalling transmitted on the PDCCH is avoided to be frequently used to perform SPS operations, and PDCCH resource is saved; and by including indication information of UEs belonging to a same group in the data package, operations on SPS resource of multiple UEs may be performed at a same time, and system capacity is improved.

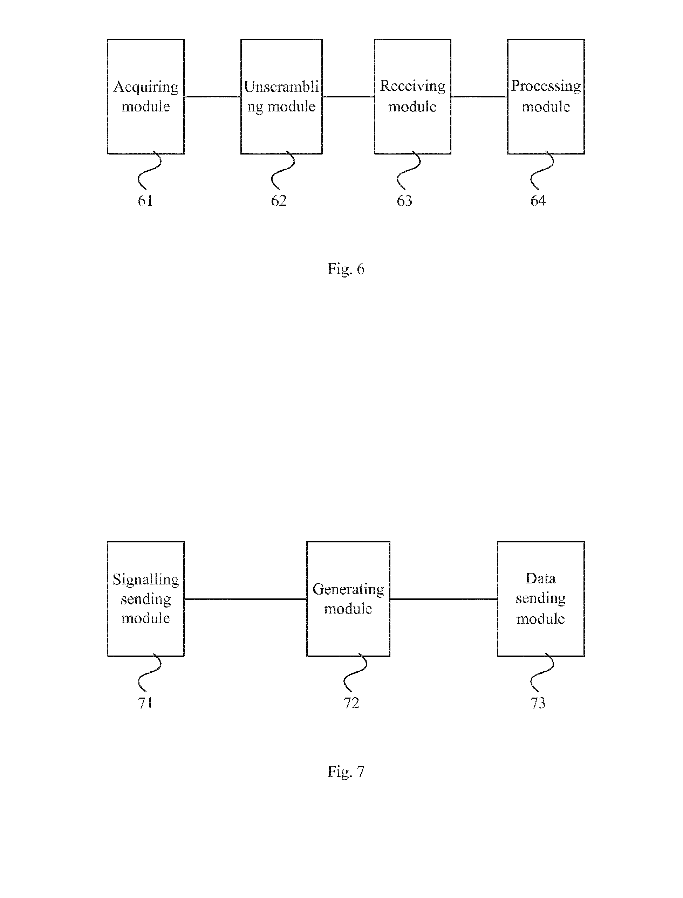

Fig. 6 is a schematic diagram of a structure of a user equipment of a fourth embodiment of the present invention, comprising an acquiring module 61, an unscrambling module 62, a receiving module 63 and a processing module 64. The acquiring module 61 is configured to acquire a SPS group scheduling identity, wherein the SPS group scheduling identity is shared by User Equipments (UEs) belonging to a first group; the unscrambling module 62 is configured to receive control signalling scrambled with the SPS group scheduling identity on a PDCCH, and unscramble the control signalling according to the SPS group scheduling identity; the receiving module 63 is configured to receive a data package on a Physical Down Shared Channel (PDSCH) according to unscrambled control signalling, wherein the data package comprises indication information for instructing at least one UE belonging to the first group to perform a SPS operation; and the processing module 64 is configured to determine that it is necessary to perform the SPS operation according to the indication information, and perform the SPS operation. The present embodiment may further comprise a sending module, configured to send acknowledgment ACK information to a network device, so that the network device starts the SPS operation on the UE, which sends the ACK information according to configuration.

Particularly, the processing module 64 may specifically configured to perform, from the effective moment to perform the SPS operation on SPS resource indicated by the third field, according to the indication indicated by the first field and the SPS resource indicated by the fourth field, by using the MCS and transmission block size indicated by the fourth field, the SPS activation or the SPS modification according to the second field; or, perform, from the effective moment to perform the SPS operation on SPS resource indicated by the third field, and according to the indication indicated by the first field and the second field, SPS deletion on the SPS resource indicated by the fourth field; wherein the first field is used for indicating to perform the SPS operation on uplink SPS resource or to perform the SPS operation on downlink SPS resource; the second field is used for indicating to perform a SPS activation, or a SPS modification, or a SPS release on SPS resource; the third field is used for indicating the effective moment to perform SPS operation on SPS resource; and the fourth field is used for indicating the SPS resource, the MCS and the transmission block size..

Or, the processing module 64 may specifically configured to determine, from the effective moment to perform SPS operation on SPS resource indicated by the third field, and according to the MCS and transmission block size indicated by the fourth field and the indication indicated by the first field, a SPS operation, wherein the SPS operation comprises a SPS resource activation, a SPS modification or a SPS release; and to perform the SPS operation according to the SPS resource indicated by the fourth field, wherein the first field is used for indicating to perform the SPS operation on uplink SPS resource or to perform the SPS operation on downlink SPS resource, the third field is used for indicating the effective moment to perform SPS operation on SPS resource, and the fourth field is used for indicating the SPS resource, the MCS and the transmission block size.

The acquiring module 61 is specifically configured to receive a Radio Resource Control (RRC) message sent by a base station, wherein the RRC message carries the random access group scheduling identity allocated for the User equipments (UEs) belonging to the first group;
or,
receive a paging message sent by a base station, the paging message carrying a group identity of the first group, and taking the group identity as the random access group scheduling identity;
or,
configure the SPS group scheduling identity for the User equipments (UEs) belonging to the first group.

With regard to the other functions and corresponding functionality structures of the user equipment mentioned above, the above-mentioned embodiments of a method may be referred to, which will not be described in detail herein.

In the present embodiment, by triggering a SPS operation with indication information in a data package instead of control signalling transmitted on a PDCCH, control signalling transmitted on the PDCCH is avoided to be frequently used to perform SPS operations, and PDCCH resource is saved; and by including indication information of UEs belonging to a same group in the data package, operations on SPS resource of multiple UEs may be performed at a same time, and system capacity is improved.

Fig. 7 is a schematic diagram of a structure of a network device of a fifth embodiment of the present invention, comprising a signalling sending module 71, a generating module 72, and a data sending module 73. The signalling sending module 71 is configured to send control signalling scrambled with a SPS group scheduling identity to a User Equipment (UE) belonging to a first group on a PDCCH, wherein the SPS group scheduling identity is shared by user equipments belonging to the first group; the generating module 72 is configured to generate a data package, wherein the data package comprises indication information for instructing at least one UE belonging to the first group to perform a SPS operation; and the data sending module 73 is configured to send the data package to the UE, so that the UE unscrambles the control signalling according to the SPS group scheduling identity, receives the data package according to unscrambled control signalling, determines that it is necessary to perform the SPS operation according to the indication information in the data package, and performs the SPS operation.

The present embodiment may further comprises a receiving module, configured to receive acknowledgment ACK information sent by the UE, and start the SPS operation on the UE, which sends the ACK information according to configuration.

The network device may be a base station.

With regard to the other functions and corresponding functionality structures of the network device mentioned above, the above-mentioned embodiments of a method may be referred to, which will not be described in detail herein.

In the present embodiment, by triggering a SPS operation with indication information in a data package instead of control signalling transmitted on a PDCCH, control signalling transmitted on the PDCCH is avoided to be frequently used to perform SPS operations, and PDCCH resource is saved; and by including indication information of UEs belonging to a same group in the data package, operations on SPS resource of multiple UEs may be performed at a same time, and system capacity is improved.

It should to be understood that related features in the respective embodiments mentioned above may be mutually referred to. In addition, the terms "first", "second" and so on in the respective embodiments mentioned above are just for distinguishing the respective embodiments, rather than representing preference of the respective embodiments.

It should be appreciated for those of ordinary skill in the art that all or a part of the procedures in the above-mentioned embodiments of a method may be implemented with a computer program instructing corresponding hardware. The above-mentioned program may be stored in a computer readable storage medium. The procedures of the embodiments of the respective methods mentioned above may be included when the program is executed; and the above-mentioned storage medium includes various kinds of medium that may store program codes, such as a ROM, a RAM, a disk, or an optical disk, or the like.

In the end, It should be mentioned that the preceding embodiments are only used to illustrate the technical solutions of the present invention rather than limiting the present invention; though the present invention is illustrated in detail by referring to the preceding embodiments, it should be understood by those of ordinary skill in the art that modifications may still be made on the technical solutions disclosed in the preceding respective embodiments, or equivalent alterations may be made to a part of technical characteristics thereof; and these modifications or alterations do not make the nature of corresponding technical solutions departure from the spirit and scope of the technical solutions of the respective embodiments of the present invention.

## Claims

1. A method for semi-persistent scheduling, comprising:
acquiring a Semi-Persistent Scheduling (SPS) group scheduling identity, wherein the SPS group scheduling identity is shared by User Equipments (UEs) belonging to a first group;
receiving control signalling scrambled with the SPS group scheduling identity on a Physical Downlink Control Channel (PDCCH), and unscrambling the control signalling according to the SPS group scheduling identity;
receiving a data package on a Physical Down Shared Channel (PDSCH) according to unscrambled control signalling, wherein the data package comprises indication information for instructing at least one UE belonging to the first group to perform a SPS operation; and
determining that it is necessary to perform the SPS operation according to the indication information, and performing the SPS operation.

2. The method of claim 1, wherein the data package comprises a Media Access Control Protocol Data Unit (MAC PDU); and
the indication information for instructing at least one UE belonging to the first group to perform a SPS operation comprises:
a Media Access Control Control Element (MAC CE) for instructing at least one UE belonging to the first group to perform the SPS operation.

3. The method of claim 1, wherein the SPS operation comprises:
a SPS activation, a SPS modification or a SPS release.

4. The method of claim 1, further comprising:
sending acknowledgment (ACK) information to a network device, so that the network device starts the SPS operation on the UE, which sends the ACK information according to configuration.

5. The method of claim 2, wherein the MAC CE comprises:
a first field for indicating to perform the SPS operation on uplink SPS resource or to perform the SPS operation on downlink SPS resource;
a second field for indicating to perform a SPS activation, a SPS modification, or a SPS release on SPS resource;
a third field for indicating an effective moment to perform the SPS operation on SPS resource; and
a fourth field for indicating SPS resource, a Modulation and Coding Scheme (MCS) and a transmission block size.

6. The method of claim 5, wherein the determining that it is necessary to perform the SPS operation according to the indication information, and performing the SPS operation, comprises:
performing, from the effective moment to perform the SPS operation on SPS resource indicated by the third field, according to the indication indicated by the first field and the SPS resource indicated by the fourth field, by using the MCS and the transmission block size indicated by the fourth field, the SPS activation or the SPS modification according to the second field; or
performing, from the effective moment to perform the SPS operation on SPS resource indicated by the third field, according to the indication indicated by the first field and according to the second field, a SPS deletion on the SPS resource indicated by the fourth field.

7. The method of claim 2, wherein the MAC CE comprises:
a first field for indicating to perform the SPS operation on uplink SPS resource or to perform the SPS operation on downlink SPS resource;
a third field for indicating an effective moment to perform the SPS operation on SPS resource; and
a fourth field for indicating SPS resource, a MCS and a transmission block size.

8. The method of claim 7, wherein the determining that it is necessary to perform the SPS operation according to the indication information, and performing the SPS operation, comprises:
determining, from the effective moment to perform the SPS operation on SPS resource indicated by the third field, and according to the MCS or the transmission block size indicated by the fourth field and the indication indicated by the first field, the SPS operation, the SPS operation comprising a SPS resource activation, a SPS modification or a SPS release, and performing the SPS operation according to the SPS resource indicated by the fourth field.

9. The method of claim 2, wherein the MAC PDU comprises at least one MAC CE and a MAC PDU sub-header, wherein the MAC PDU sub-header comprises a Logical Channel Identity (LCID) field, wherein the LCID field comprises a first value, and the first value is used for indicating that the MAC CE is used for instructing at least one UE belonging to the first group to perform the SPS operation.

10. The method of claim 2, wherein the data package comprises indication information for instructing at least one UE belonging to the first group to perform a SPS operation, comprises:
the MAC PDU comprises at least one Media Access Control Control Element (MAC CE), wherein each MAC CE of the at least one MAC CE comprises, respectively, an identity of a UE needing to perform semi-persistent scheduling and an indication for instructing the UE needing to perform semi-persistent scheduling to perform a SPS activation, a SPS modification or a SPS release.

11. The method of claim 2, wherein the data package comprises indication information for instructing at least one UE belonging to the first group to perform a SPS operation, comprises:
the MAC PDU comprises one MAC CE, wherein the one MAC CE comprises at least one semi-persistent scheduling unit, wherein each semi-persistent scheduling unit of the at least one semi-persistent scheduling unit comprises, respectively, an identity of a UE needing to perform semi-persistent scheduling and a command for instructing the UE needing to perform semi-persistent scheduling to perform a SPS activation, a SPS modification or a SPS release.

12. A method for semi-persistent scheduling, comprising:
sending control signalling scrambled with a SPS group scheduling identity to a User Equipment (UE) belonging to a first group on a Physical Downlink Control Channel (PDCCH), wherein the SPS group scheduling identity is shared by user equipments belonging to the first group;
generating a data package, wherein the data package comprises indication information for instructing at least one UE belonging to the first group to perform a SPS operation; and
sending the data package to the UE, so that the UE unscrambles the control signalling according to the SPS group scheduling identity, receives the data package according to unscrambled control signalling, determines that it is necessary to perform the SPS operation according to the indication information in the data package, and performs the SPS operation.

13. The method of claim 12, further comprising:
receiving acknowledgment (ACK) information sent by the UE, and starting the SPS operation on the UE, which sends the ACK information according to configuration.

14. The method of claim 13, wherein the SPS operation comprises:
a SPS activation, a SPS modification or a SPS release.

15. A user equipment, comprising:
an acquiring module, configured to acquire a Semi-Persistent Scheduling (SPS) group scheduling identity, wherein the SPS group scheduling identity is shared by User Equipments (UEs) belonging to a first group;
a unscrambling module, configured to receive control signalling scrambled with the SPS group scheduling identity on a Physical Downlink Control Channel (PDCCH), and unscramble the control signalling according to the SPS group scheduling identity acquired by the acquiring module;
a receiving module, configured to receive a data package on a Physical Down Shared Channel (PDSCH) according to the control signalling unscrambled by the unscrambling module, wherein the data package comprises indication information for instructing at least one UE belonging to the first group to perform a SPS operation; and
a processing module, configured to determine that it is necessary to perform the SPS operation according to the indication information received by the receiving module, and perform the SPS operation.

16. The equipment of claim 15, further comprising:
a sending module, configured to send acknowledgment (ACK) information to a network device after the processing module performs the SPS operation, so that the network device starts, according to configuration, the SPS operation on the UE sending the ACK information.

17. The equipment of claim 15, wherein the processing module is specifically configured to perform, from an effective moment to perform the SPS operation on SPS resource indicated by a third field, according to indication indicated by a first field and SPS resource indicated by a fourth field, by using a MCS and a transmission block size indicated by the fourth field, a SPS activation or a SPS modification according to a second field; or, perform, from the effective moment to perform the SPS operation on SPS resource indicated by the third field, according to the indication indicated by the first field and according to the second field, a SPS deletion on the SPS resource indicated by the fourth field; wherein
the first field is used for indicating to perform the SPS operation on uplink SPS resource or to perform the SPS operation on downlink SPS resource;
the second field is used for indicating to perform a SPS activation, a SPS modification, or a SPS release on SPS resource;
the third field is used for indicating the effective moment to perform the SPS operation on SPS resource; and
the fourth field is used for indicating the SPS resource, the Modulation and Coding Scheme (MCS) and the transmission block size.

18. The equipment of claim 15, wherein
the processing module is specifically configured to determine, from an effective moment to perform the SPS operation on SPS resource indicated by a third field, and according to a MCS and a transmission block size indicated by a fourth field and indication indicated by a first field, the SPS operation, wherein the SPS operation comprises a SPS resource activation, a SPS modification or a SPS release, and to perform the SPS operation according to SPS resource indicated by a fourth field;
the first field is used for indicating to perform the SPS operation on uplink SPS resource or to perform the SPS operation on downlink SPS resource;
the third field is used for indicating the effective moment to perform the SPS operation on SPS resource; and
the fourth field is used for indicating the SPS resource, the MCS and the transmission block size.

19. A network device, comprising:
a signalling sending module, configured to send control signalling scrambled with a SPS group scheduling identity to a User Equipment (UE) belonging to a first group on a Physical Downlink Control Channel (PDCCH), wherein the SPS group scheduling identity is shared by user equipments belonging to the first group;
a generating module, configured to generate a data package, wherein the data package comprises indication information for instructing at least one UE belonging to the first group to perform a SPS operation; and
a data sending module, configured to send the data package to the UE, so that the UE unscrambles the control signalling according to the SPS group scheduling identity, receives the data package according to unscrambled control signalling, determines that it is necessary to perform the SPS operation according to the indication information in the data package, and performs the SPS operation.

20. The device of claim 19, further comprising:
a receiving module, configured to receive acknowledgment ACK information sent by the UE, and start the SPS operation on the UE, which sends the ACK information according to configuration.
